Europäisches Patentamt

European Patent Office

Office européen des brevets

(11) Numéro de publication: **0 376 835 B1**

# (12) FASCICULE DE BREVET EUROPEEN

(45) Date de publication de fascicule du brevet: **10.05.95**  (51) Int. Cl.6: **C02F 1/48**

(21) Numéro de dépôt: **89403645.8**

(22) Date de dépôt: **22.12.89**

(54) **Dispositif de traitement électrique d'électrolytes liquides de conductivité élevée, en particulier d'eau de ville ou d'eau de rivière.**

(30) Priorité: **26.12.88 FR 8817192**

(43) Date de publication de la demande:
**04.07.90 Bulletin 90/27**

(45) Mention de la délivrance du brevet:
**10.05.95 Bulletin 95/19**

(84) Etats contractants désignés:
**BE CH DE ES GB IT LI LU NL SE**

(56) Documents cités:
| | |
|---|---|
| **EP-A- 0 001 285** | **AU-A- 497 936** |
| **CH-A- 279 916** | **CH-A- 387 558** |
| **DE-A- 2 708 240** | **FR-A- 852 333** |
| **FR-A- 2 547 573** | **GB-A- 1 274 902** |
| **US-A- 3 728 245** | **US-A- 3 798 150** |
| **US-A- 3 859 195** | **US-A- 4 073 712** |
| **US-A- 4 235 698** | |

(73) Titulaire: **Taillet, Joseph**
**33, rue de la Tourelle**
**F-92100 Boulogne (FR)**

(72) Inventeur: **Taillet, Joseph**
**33, rue de la Tourelle**
**F-92100 Boulogne (FR)**
Inventeur: **Bacot, Dominique**
**31, Ouai Anatole France**
**F-75007 Paris (FR)**
Inventeur: **Detroyat, Jean-Michel**
**14, rue Condé**
**F-75006 Paris (FR)**

(74) Mandataire: **Plaçais, Jean-Yves**
**Cabinet Netter,**
**40, rue Vignon**
**F-75009 Paris (FR)**

EP 0 376 835 B1

## Description

L'invention concerne un dispositif destiné au traitement électrique des électrolytes liquides de conductivité élevée.

La notion de conductivité élevée peut être introduite de deux façons et on peut démontrer que les propriétés ainsi mises en lumière sont corrélatives :

En théorie, on montre que si l'on applique brusquement un champ électrique E perpendiculaire à la surface libre S d'un milieu conducteur de permittivité $\epsilon$ et de résistivité $\rho$, il se développe dans ce milieu des courants qui amènent, près de la surface S, des charges électriques qui s'opposent à la pénétration du champ extérieur au sein du milieu, sauf dans une couche de surface dont l'épaisseur est très inférieure au millième de millimètre. Ce phénomène demande cependant un certain temps, et, pendant ce temps, le champ extérieur peut pénétrer dans le milieu. Ce temps se calcule par la formule $\tau = \epsilon\rho$. Le liquide est de conductivité élevée si le temps $\tau$ est très inférieur aux temps caractéristiques des actions électriques extérieures au milieu, par exemple à la période du champ électrique alternatif appliqué.

En pratique, un volume donné (par exemple un cube d'un mètre de côté) de liquide de conductivité élevée est parcouru par des courants intenses (par exemple centaines ou milliers d'ampères) lorsqu'on applique entre les faces du cube une tension faible (de l'ordre de quelques volts), au contraire, pour un liquide de conductivité faible ces chiffres peuvent être respectivement de quelques nanoampères pour des tensions de dizaines de kilovolts.

Il s'ensuit que, dans un liquide de conductivité élevée, il est impossible d'appliquer des différences de potentiel entre deux points du liquide (ou, ce qui est équivalent, d'appliquer un champ électrique de valeur mesurable au liquide) sans y faire passer des courants très intenses, ce qui est parfaitement exclu si l'on ne dispose pas, dans le liquide, des électrodes conductrices en contact direct avec ce liquide.

L'invention concerne en particulier le traitement électrique de l'eau de ville ou de rivière, utilisée par exemple comme eau de refroidissement, et cela pour éviter le dépôt de tartre dans les équipements de refroidissement qui sont traversés par cette eau. Sont particulièrement concernés les tubes d'échangeurs de chaleur et les tubes de refroidissement des condenseurs de vapeur, utilisés dans les centrales thermiques ou nucléaires. Un autre exemple concerne l'eau de lavage utilisée pour entraîner l'excédent d'aérosol de peinture obtenu lors de la peinture au pistolet des carrosseries de voitures automobiles ; cet aérosol forme, dans l'eau non traitée, un film adhérent aux parois qui, pose de difficiles problèmes de nettoyage ; si l'eau a été traitée (par exemple électriquement) l'aérosol flocule sous forme de minuscules grains élémentaires non adhérents qui sont entraînés par le courant d'eau de lavage et dont on peut facilement se débarasser.

Il existe déjà de nombreux procédés de traitement de liquides faisant appel à l'action de champs électriques ou magnétiques. Ces procédés, qui visent a conférer à ces liquides des propriétés utiles pour l'exploitation de certaines techniques, se caractérisent tous par le fait que ces champs pénètrent dans les liquides sur lesquels ils doivent agir.

Tout d'abord, on peut citer différents brevets qui concernent le traitement d'hydrocarbures servant de carburant pour des moteurs à combustion interne, c'est-à-dire de liquides qui, à la différence de l'eau, se comportent essentiellement comme des diélectriques.

Par exemple, le brevet US 3 116 726 au nom de M. J. KWARTZ, décrit un dispositif destiné à améliorer la combustion des moteurs à combustion interne, ce dispositif étant formé par un enroulement destiné à soumettre le carburant à un champ magnétique intense. Le brevet US 4 373 494 au nom de Mac MAHON, concerne également le traitement de carburant hydrocarboné et décrit un dispositif permettant d'appliquer un fort champ électrique au carburant avant sa combustion. Comme le carburant est un diélectrique isolant, le champ électrique peut y pénétrer sans difficulté. Le brevet Mac MAHON vise à augmenter l'intensité du champ à l'intérieur du combustible. Le brevet GB 806 230, au nom de MELI, concerne un dispositif destiné à soumettre le carburant à des champs électromagnétiques. Il est bien précisé qu'il s'agit d'un carburant et que les moyens destinés à appliquer les champs sont réunis de façon intermittente à la source de courant, ce qui exclut toute action d'application continue d'un courant ou d'une tension. Cette particularité est en effet essentielle car l'homme du métier sait que les actions électromagnétiques ne peuvent être produites que par des courants ou des tensions variables.

On connaît, par ailleurs, d'autres brevets qui concernent l'application à un liquide de champs électriques ou magnétiques.

Par exemple, le brevet français n° 70.31089, publié sous le n° 2 059 215, au nom de la Société LABOR MUSZERIPARI MUVEK, concerne un procédé de traitement de liquides, en général, dans lequel ces liquides sont obligés de passer dans une configuration de champs électriques formée de champs alternés, ou sont traités au repos par des impulsions de tension, dont les orientations font des angles régis par une relation spécifique dans laquelle interviennent les permittivités des parois du récipient et du liquide, un champ magnétique ou électrique supplémentaire pouvant être appliqué le long de l'écoulement des liquides. Ce brevet est donc fondé sur l'existence de variations dans la direction de l'application de l'action des champs considérés sur une même molécule fluide, ces variations pouvant provenir soit du changement d'orientation de l'action au cours du temps si la molécule est au repos, soit du changement provoqué, du fait de l'écoulement, par le passage de la molécule dans des champs de direction différente.

Le brevet US 4 073 712, au nom de MEANS et al., revendique un traitement électrostatique de l'eau fondé sur la pénétration du champ électrique dans l'eau. Le brevet décrit un dispositif d'électrodes dont au moins une est isolée et entre lesquelles le fluide à traiter doit passer. Le brevet spécifie clairement que le pourcentage du potentiel apparaissant à l'intérieur du liquide doit dépasser 50 % du potentiel total appliqué aux électrodes. Ces potentiels sont calculés par des formules classiques de capacités en faisant intervenir la permittivité du liquide, le schéma équivalent de l'ensemble étant formé de condensateurs en série, ce qui montre que le procédé implique que les champs électriques pénètrent à coeur dans le liquide à traiter.

Ce procédé ne peut donc s'appliquer qu'à des liquides ayant des résistances extrêmement élevées, par exemple de l'huile, mais certainement pas à de l'eau, contrairement à ce qui est indiqué dans le brevet.

L'invention s'applique au contraire, comme déjà indiqué plus haut, au traitement de liquides dont la conductivité est suffisamment élevée pour empêcher le champ électrique continu de pénétrer, en l'absence de tout passage de courant, au-delà d'une couche de surface de profondeur inférieure au millième de millimètre.

Dans le cas de l'eau de ville ou de rivière, la permittivité a une valeur constante (unités M.K.S.) :

$$\epsilon = 8,854.10^{-12} \times 80 = 7.10^{-10} \text{ Fm-1}$$

La résistivité dépend de la pureté de l'eau ; elle varie de 1 $\Omega$m pour de l'eau très chargée en sels dissous à 500 $\Omega$m pour de l'eau très pure. Si l'on choisit, à titre d'exemple, ce dernier cas (eau peu conductrice) :

$$\rho = 500 \ \Omega\text{m donc } \epsilon\rho = 3,5.10^{-7} \text{ S.}$$

Le temps pendant lequel le champ extérieur peut pénétrer au sein du liquide, à la suite d'une brusque application au moyen par exemple d'une électrode recouverte d'isolant, est inférieur au millionième de seconde. Donc non seulement le champ électrique continu, mais aussi les champs alternatifs de fréquence industrielle jusqu'au Méga-Hertz sont incapables de pénétrer dans l'eau (par contre, comme il est bien connu, les champs électriques à la fréquence de 2,45 GigaHertz des fours à micro-ondes y pénètrent facilement).

L'invention a pour objet un nouveau dispositif pour le traitement électrique d'électrolytes liquides de conductivité élevée, en particulier d'eau de ville ou d'eau de rivière, comprenant un récipient propre à être traversé par l'électrolyte à traiter, au moins une électrode disposée à l'intérieur du récipient et comportant une surface conductrice recouverte d'une couche d'isolant, une alimentation haute tension continue, et des moyens pour relier la surface conductrice de la (des) électrodes(s) à une borne positive de l'alimentation en haute tension.

Un dispositif de ce type est connu notamment d'après AV-B 497936. Un autre dispositif pour le traitement électrique de l'eau est connu de GB-A-1 274 902.

Le dispositif de l'invention est caractérisé en ce qu'il comprend en outre au moins une contre-électrode disposée à l'intérieur du récipient et possédant une surface conductrice nue ou recouverte d'une couche d'isolant, qui est reliée à une borne de polarité négative de l'alimentation en haute tension ;

en ce que la (les) électrode(s) recouverte(s) d'une couche d'isolant et la (les) contre-électrode(s) recouverte(s) d'une couche d'isolant ont, indépendamment de leur configuration ou de leur disposition mutuelle, une surface de paroi aussi grande que possible pour fournir une surface de contact aussi élevée que possible entre la couche d'isolant et l'électrolyte à traiter.

Lorsqu'une haute tension est appliquée à la ou chaque électrode revêtue d'une couche isolante, il se produit un phénomène de paroi au contact entre cette couche isolante et l'électrolyte à traiter, lequel se trouve au même potentiel que la partie métallique, généralement à la masse, de l'installation qui le renferme ou, dans le cas où cette installation est entièrement isolante, au potentiel desdites électrodes nues.

Ce phénomène est une concentration d'ions au voisinage immédiat de la paroi, concentration qui a pour effet d'accélérer les réactions chimiques utiles au traitement que l'on recherche pour l'électrolyte. Par exemple, dans le cas du traitement de l'eau pour éviter l'entartrage des conduites, les réactions chimiques favorisées sont celles qui conduisent à la production de germes de calcaire ou carbonate de calcium en suspension dans le liquide afin d'obtenir par la suite un dépôt de tartre, non pas sur les parois des installations, mais sur ces germes. Il est ensuite aisé de se débarrasser de ce tartre en suspension, alors que l'élimination du tartre déposé sur une paroi est très difficile.

Le phénomène qui vient d'être décrit, et qui repose sur les propriétés de la couche de contact entre l'électrolyte et une électrode recouverte d'une couche isolante, s'apparente au phénomène dit de catalyse hétérogène utilisé en génie chimique, et dans lequel les réactions s'effectuant aux interfaces jouent un rôle prépondérant.

Comme il s'agit d'un phénomène de paroi qui se produit au contact de la couche isolante de la ou chaque électrode portée à haute tension, la disposition mutuelle des électrodes et contre-électrodes n'est pas critique.

De ce fait, la ou chaque électrode, d'une part, et la ou chaque contre-électrode, d'autre part, peuvent être situées au même niveau dans l'écoulement de l'électrolyte dans le récipient, ce dernier pouvant avoir une structure coaxiale ou non coaxiale, symétrique ou non symétrique.

En variante, la ou chaque électrode, d'une part, et la ou chaque contre-électrode, d'autre part, peuvent être situées en aval ou en amont les unes des autres dans l'écoulement de l'électrolyte dans le récipient, ce dernier pouvant, là encore, avoir une structure coaxiale ou non coaxiale, symétrique ou non symétrique.

Par contre, on a tout intérêt à choisir des électrodes qui offrent une surface de paroi aussi grande que possible de manière que la surface de contact entre la couche isolante et l'électrolyte à traiter soit la plus élevée possible.

Dans une forme de réalisation de l'invention, le dispositif comprend plusieurs électrodes constituées par des plaques disposées parallèlement à l'écoulement de l'électrolyte dans le récipient.

Dans une autre forme de réalisation de l'invention, la ou chaque électrode a la forme d'un profilé à section transversale en forme d'étoile.

Dans une autre forme de réalisation de l'invention, la ou chaque électrode a la forme d'un cylindre circulaire sur lequel sont rapportées des couronnes circulaires de diamètre supérieur à celui du cylindre.

Dans une autre variante, le dispositif comprend plusieurs électrodes constituées sous la forme d'une multiplicité de fils isolés. Ces fils isolés peuvent être tendus parallèlement à la direction d'écoulement de l'électrolyte à l'intérieur du récipient ou bien ils peuvent former un angle non nul avec cette direction d'écoulement.

Dans une forme de réalisation préférée de l'invention, la ou chaque contre-électrode a une surface métallique nue qui est reliée à la terre par une résistance de manière à protéger le dispositif contre les courants de court-circuit.

Dans une autre variante de réalisation, l'invention prévoit que le dispositif comprend en outre au moins une troisième électrode comportant une surface conductrice nue, portée à une tension électrique intermédiaire entre celle de la ou chaque électrode et celle de la ou chaque contre- électrode.

Dans la description qui suit, faite seulement à titre d'exemple, on se réfère aux dessins annexés, sur lesquels :

- la figure 1 est une vue schématique en élévation, d'un dispositif conforme à l'invention ;
- la figure 2 est une vue en coupe suivant la ligne II-II de la figure 1 ;
- la figure 3 représente le schéma électrique équivalent du dispositif des figures 1 et 2 ;
- la figure 4 est une vue schématique en élévation d'un dispositif selon une autre forme de réalisation ;
- la figure 5 représente un dispositif selon encore une autre forme de réalisation ;
- les figures 6, 7 et 8 représentent respectivement, en coupe transversale, un dispositif avec différentes configurations d'électrodes et de contre-électrodes ;
- la figure 9 est une vue en perspective montrant schématiquement des électrodes haute tension réalisées sous la forme de plaques parallèles ;
- les figures 10 et 11 sont des vues en perspective représentant respectivement deux types d'électrodes ;
- la figure 12 est une vue en élévation d'une contre-électrode ; et
- la figure 13 représente schématiquement un dispositif selon une autre forme de réalisation, dans laquelle les électrodes et les contre-électrodes sont toutes revêtues d'une couche isolante.

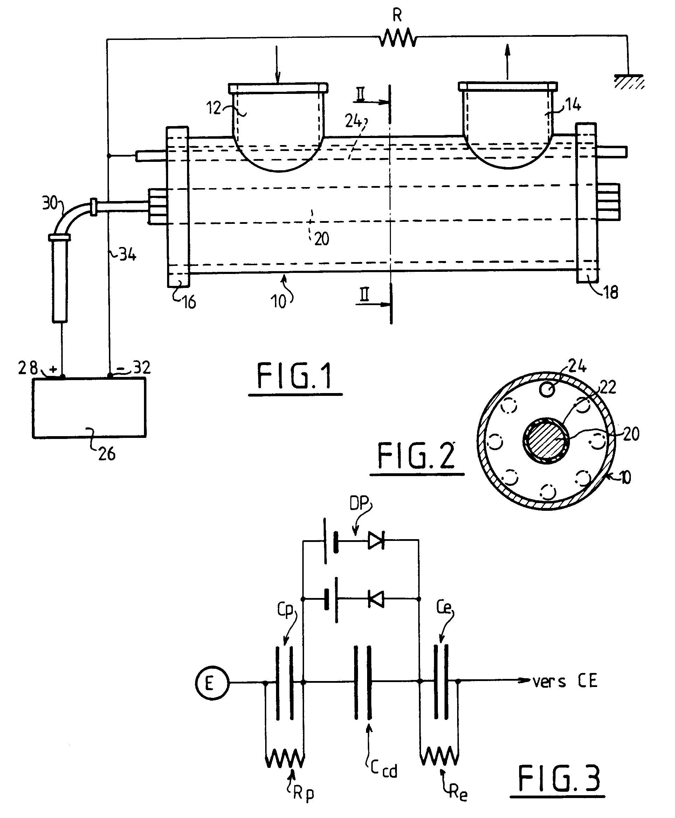

Le dispositif de traitement électrique, tel que représenté aux figures 1 et 2, comprend un récipient 10 de forme générale cylindrique circulaire ouvert à ses deux extrémités, ce récipient pouvant être formé d'un matériau conducteur ou isolant. Du récipient 10, dépendent deux embouts latéraux : un embout d'entrée 12 et un embout de sortie 14 pour l'électrolyte liquide à traiter. Sur les deux extrémités ouvertes du récipient 10, sont fixés, de manière amovible et étanche, deux flasques 16 et 18. Entre ces deux flasques, est montée, en leur centre, une électrode 20 ayant la forme d'un barreau cylindrique plein formé d'un matériau conducteur, cette électrode étant revêtue d'une couche isolante 22, par exemple constituée par un polymère. En outre, entre les deux flasques 16 et 18, est montée une contre-électrode 24 constituée par un barreau cylindrique s'étendant parallèlement à l'électrode 20. La surface externe de la contre-électrode 24 est nue, c'est-à-dire non revêtue.

Le dispositif comprend en outre une alimentation 26 en haute tension continue par exemple de l'ordre de quelques dizaines de kilovolts, dont la borne positive 28 (borne haute tension) est connectée à l'électrode 20 par une liaison électrique 30 et dont la borne négative 32 (borne basse tension) est connectée par une liaison électrique 34 à la contre-électrode 24. Cette liaison 34 est raccordée à la terre par l'intermédiaire d'une résistance R, par exemple égale à 100 ohms. Bien que le dispositif représenté aux figures 1 et 2 ne comporte qu'une seule contre-électrode 24, il est possible, comme montré en trait interrompu sur la figure 2, d'utiliser huit contre-électrodes 24, s'étendant parallèlement entre elles et réparties régulièrement autour de l'électrode centrale 20.

Le fonctionnement du dispositif représenté aux figures 1 et 2 repose sur l'utilisation de trois mécanismes physico-chimiques :

1°) La loi de l'équilibre chimique, connue sous le nom de "loi d'action de masse" ;

2°) L'existence, à l'interface entre un électrolyte liquide et un corps solide ou gazeux, d'une couche électrisée appelée "couche double" ;

3°) L'existence au sein d'un isolant solide, et plus particulièrement d'un polymère, de défauts ponctuels du réseau cristallin pouvant jouer le rôle de porteurs de charges.

Le premier de ces mécanismes est bien connu. Quant au second et au troisième, ils relèvent de spécialités différentes et n'ont jamais fait l'objet de publication susceptible de suggérer la possibilité d'un rapprochement des techniques correspondantes. Le dispositif de l'invention combine ces trois mécanismes, ce qui permet d'obtenir un fonctionnement optimal du dispositif.

Ceci peut être montré sur un cas particulier de grande importance industrielle, à savoir le traitement des eaux de refroidissement pour éviter le dépôt de tartre dans les conduites et les condenseurs.

a) Utilisation de la loi d'action de masse dans une couche de surface pour déplacer un équilibre chimique

Il a été montré par de nombreux auteurs que l'introduction de germes cristallins de calcaire $CO_3Ca$ au sein d'un écoulement d'eau de refroidissement permet d'éviter le dépôt de tartre sur les parois de l'installation ; en effet, toute cristallisation subséquente aura tendance à se produire sur ces germes. Par ailleurs, la production de ces germes résulte des réactions suivantes dont la première est réversible :

$$CO_3H- + OH- \rightleftharpoons CO_3-- + H_2O \qquad (1)$$

$$CO_3-- + Ca++ \rightarrow CO_3Ca \qquad (2)$$

La première réaction est une réaction d'équilibre. Cet équilibre est déplacé vers la droite (formation d'ions carbonate $CO_3--$) si le produit des concentrations de l'ion bicarbonate $CO_3H-$ et de l'ion hydroxyle OH- augmente. Il en résulte que la seconde réaction est accélérée et que le carbonate de calcium cristallise, généralement sous forme de germes au début de la réaction, et par la suite en augmentant le volume des cristaux déjà déposés sur les parois ou en suspension dans le liquide. Il est donc essentiel de produire rapidement des germes en suspension en accélérant les réactions dès l'introduction d'eau brute dans le système.

Une façon classique de déplacer l'équilibre vers la droite est de procéder à une électrolyse de l'eau, ce qui augmente légèrement la quantité d'ions hydroxyle OH-. L'invention propose une solution différente, qui consiste à augmenter simultanément et très fortement la concentration des ions bicarbonate $CO_3H-$ et hydroxyle OH-, non pas dans tout l'électrolyte liquide mais seulement dans la couche en contact avec une paroi isolante, par exemple un polymère, c'est-à-dire la couche de revêtement de la ou de chaque électrode à haute tension.

Cette augmentation de la concentration déplace la réaction (1) vers la droite : il y a production d'ions $CO_3--$. De plus, la disposition proposée par l'invention écarte les ions positifs Ca++ de la paroi isolante et empêche, par là même, la réaction (2) et donc la cristallisation de se produire sur cette surface. La paroi va ainsi jouer pour les réactions d'équilibre (1) un rôle catalytique, semblable à celui des surfaces utilisées en catalyse hétérogène. Ce procédé n'est pas exclusif de l'électrolyse classique, à laquelle il peut se combiner pour améliorer encore le rendement.

Pour assurer cette augmentation de la concentration, l'invention utilise les propriétés de la couche électrique double des électrolytes et celles de la migration des charges dans les polymères isolants.

b) Utilisation des propriétés de la couche double des électrolytes

Les propriétés physiques de l'eau dérivent du fait que c'est un électrolyte et du fait de la structure polaire de sa molécule, laquelle est formée de la réunion d'un ion négatif d'oxygène O-- et de deux ions positifs d'hydrogène H+. Les électrolytes sont partiellement décomposés en ions positifs H+ et négatifs hydroxyle OH-. On sait depuis HELMOLTZ (1853) que les liquides polaires et les électrolytes sont bordés, au contact d'un gaz, d'un autre liquide ou d'un solide, par une lisière très mince (quelques dizaines de nm [centaines d'Angströms] d'épaisseur) appelée la couche double électrique. Cette couche a fait l'objet de recherches fondamentales depuis GOUY (1908), mais aucune application industrielle n'a, à la connaissance du Demandeur, été tirée de ces études. L'ensemble des travaux effectués dans le cadre de cette recherche fondamentale aboutit aux conceptions suivantes :

Cas de l'eau pure (eau distillée) :

- les molécules polaires de l'eau s'orientent perpendiculairement à la surface libre ou au contact d'un autre liquide ou d'un gaz ; une couche d'ions hydroxyle OH- est fixée sur cette surface et forme une couche de charge négative ; les ions de cette couche sont liés par des forces qui les empêchent de participer à des réactions chimiques identiques à celles de la masse du liquide ;

- à une distance d'environ un nm (une dizaine d'Angströms) de la surface, des ions de signes opposés (ions positifs $H+$) se concentrent en évoluant librement sur une couche diffuse dont l'épaisseur (pouvant aller jusqu'à 10 nm [100 Angströms]) dépend de l'agitation thermique. Les ions de cette couche sont susceptible de réagir chimiquement comme dans la masse du liquide. La charge électrique d'espace de cette couche est égale et de signe opposé à celle de la couche de surface ; elle sert d'écran au champ électrique extérieur qui est ainsi empêché de pénétrer au sein du liquide ;

- la distance entre les deux couches est si faible que même une très petite différence de potentiel (100 millivolts) entre les deux couches se traduit par un champ électrique local extrêmement fort (1 million de volts par cm). La distance entre les deux couches. se comporte donc comme une capacité capable de supporter des champs extrêmement forts sans perdre ses propriétés d'isolement. Cette capacité peut être appelée "capacité moléculaire de la couche double". Une valeur typique de cette capacité est de 10 $\mu$F cm$^{-2}$ et une valeur typique de la charge superficielle de la couche double est de 30 $\mu$C cm$^{-2}$.

Cas de l'eau de rivière ou de ville contenant, par exemple, du carbonate de calcium :

- la couche de surface contient non plus seulement des ions OH- mais aussi des ions calcium $Ca++$, qui sont positifs et, par conséquent, réduisent la charge électrique globale de la couche de surface. En conséquence, la couche diffuse est aussi moins chargée ; il existe même une concentration en ions calcium qui annule la charge moyenne de la couche de surface, donc le potentiel de la couche double. Au-delà de cette concentration, les ions de la couche de surface sont essentiellement positifs, et les ions de la couche diffuse sont négatifs. Ils sont essentiellement représentés par des ions bicarbonate $CO_3H-$ et hydroxyle OH-.

Lorsqu'une électrode conductrice est en contact avec un électrolyte et qu'une différence de potentiel est appliquée entre l'électrode et l'électrolyte, on montre que, suivant la nature de l'électrode, des charges électriques peuvent être échangées entre ces électrodes et l'électrolyte, soit à partir des tensions les plus faibles (électrode dite réversible) soit à partir d'une différence de potentiel de l'ordre du volt (électrodes idéalement polarisables). Un courant circule alors et une électrolyse se produit. En effet, les réactions chimiques sont dominées par la présence de porteurs de charges en provenance des électrodes. Lorsque l'électrode est recouverte d'une couche parfaitement isolante, par exemple d'une couche de polymère, seul subsiste l'effet d'attraction de la couche superficielle sur les ions de signes opposés, lequel effet conduit à la concentration de ces ions dans la couche diffuse, concentration qui conduit à un déplacement de l'équilibre chimique (1) et à la formation d'ions $CO_3--$. Enfin, les ions $Ca++$ qui sont de même signe que ceux de la couche de surface, sont repoussés en dehors de la couche diffuse, si bien que la réaction (2) ne peut se produire que dans la masse du liquide après diffusion à partir de la couche diffuse des ions $CO_3--$ produits par la réaction (1).

Cependant, il a été indiqué précédemment que, pour l'eau brute, la couche superficielle a une charge électrique plutôt réduite, donc insuffisante pour produire l'effet recherché. Conformément à l'invention, on augmente artificiellement le champ électrique de la couche double pour augmenter la concentration des ions réactifs dans la couche diffuse. Pour cela, on porte à un potentiel positif élevé la ou chaque électrode. Pour avoir une idée de l'efficacité de ce procédé, un critère commode consiste à comparer la densité de charges superficielles de l'interface métal-polymère (au niveau du contact électrode-couche isolante) avec la valeur typique de 30 $\mu$C cm$^{-2}$ qui serait celle de la couche d'interface polymère-électrolyte, si celui-ci était de l'eau pure. Les lois de l'électrostatique montrent en effet que ces couches de charge ont un effet d'attraction identique sur les ions de la couche diffuse.

c) <u>Migration des ions à travers le polymère</u>

Des résultats récents de physique du solide, appliqués au cas des polymères isolants, ont montré que, sous l'effet des contraintes mécaniques associées à l'application d'un fort champ électrique, des défauts du réseau cristallin apparaissent dans les polymères. Ces défauts sont des sites privilégiés pour les charges électriques. L'application du champ est également accompagnée d'une injection de charge à l'interface métal-polymère.

Grâce à la présence des sites que constituent les défauts, les charges peuvent migrer à travers le polymère. Cette situation physique est équivalente à une augmentation avec la tension appliquée de la valeur de la conductivité du polymère, étant donné que le courant varie plus vite avec la tension que si la loi d'Ohm était respectée.

L'effet du courant de fuite est favorable à l'augmentation du champ électrique de la couche double et, par conséquent, à l'effet catalytique décrit précédemment. Si, par exemple, une forte tension positive est appliquée à la ou chaque électrode, l'interface polymère-eau va voir sa densité de charge augmenter, ce qui aura pour effet immédiat d'augmenter le champ électrique dans la capacité de la couche double et, par conséquent, d'augmenter la concentration des ions négatifs de la couche diffuse. Comme ces ions sont susceptibles de réagir chimiquement, on favorise ainsi le déplacement d'équilibre chimique recherché. Ce mécanisme est équivalent à la mise en parallèle d'une résistance de fuite de valeur élevée avec la capacité de la couche d'isolement de l'électrode. Cette configuration est à rapprocher du schéma équivalent de l'eau brute, représenté par une résistance de très faible valeur en parallèle avec une capacité. Quant à la couche double, elle est équivalente à une capacité pure de l'ordre de 10uF cm$^{-2}$ tant que la différence de potentiel qu'elle supporte ne dépasse pas une valeur de l'ordre du voit. Elle est ensuite équivalente à la même capacité en parallèle avec une diode polarisée par un élément de batterie de force électromotrice de l'ordre du volt, qui laisse passer tout le courant injecté à travers la résistance de fuite du polymère.

Le schéma électrique équivalent du dispositif des figures 1 et 2 est montré à la figure 3. Ce schéma correspond à un intervalle formé par la succession d'une électrode métallique E, d'un revêtement isolant (qui peut être un polymère), de la couche double et de la masse de l'eau (électrolyte).

Le schéma comprend successivement l'électrode E sur laquelle on applique un potentiel électrique à haute tension continue, l'électrode opposée étant appelée contre-électrode CE. A partir de l'électrode E, on trouve trois capacités en série : une capacité $C_p$ correspondant à la capacité du polymère, une capacité $C_{cd}$ correspondant à la capacité de la couche double, et une capacité $C_e$ correspondant à la capacité de l'électrolyte. En parallèle avec la capacité $C_p$, on trouve une résistance $R_p$ qui correspond à la résistance de fuite du polymère. En parallèle avec la capacité $C_{cd}$, on trouve une diode polarisée DP correspondant à la résistance de fuite de la couche double et, en parallèle avec la capacité $C_e$ une résistance $R_e$ correspondant à la résistance de fuite de l'électrolyte. La résistance de fuite de la couche double est mise en parallèle avec la capacité $C_{cd}$ représentative de la couche double si le potentiel appliqué à cette capacité dépasse une valeur limite de l'ordre du volt, d'où la diode polarisée représentée sur la figure 3. L'interface n'est alors plus "idéalement polarisable", et un faible courant de conduction peut alors traverser la couche double.

Ce faible courant de conduction contribue à provoquer une électrolyse dont les effets s'ajoutent au phénomène principal de concentration des ions dans la couche diffuse qui domine le processus ; mais ce phénomène est tout à fait secondaire vis-à-vis de ce phénomène principal ; en particulier, le courant de conduction qui la provoque est considérablement plus faible (typiquement des millions de fois) que celui qui s'écoulerait dans un dispositif classique à électrolyse utilisant la même surface d'électrodes. L'intérêt de ce courant est essentiellement lié au fait que sa présence garantit que la différence de potentiel obtenue aux bornes de la capacité moléculaire de la couche double a atteint sa valeur maximale, ce qui entraîne que la concentration des ions dans la couche diffuse a également bien atteint sa valeur maximale.

La résistance R (figure 1) qui est insérée entre la liaison 34 de retour de l'alimentation haute tension (à laquelle sont connectées les contre-électrodes) et la masse a un rôle de protection contre les arcs. En effet, si par accident, la couche isolante 22 était percée, le courant de court-circuit formerait un arc qui endommagerait alors, d'une façon irréversible, non seulement l'électrode percée mais aussi les contre-électrodes et provoquerait l'érosion des contre-électrodes. Il importe donc que les contre-électrodes soient interchangeables et que les tuyauteries de circulation de l'eau ne puissent jamais jouer le rôle de contre-électrodes.

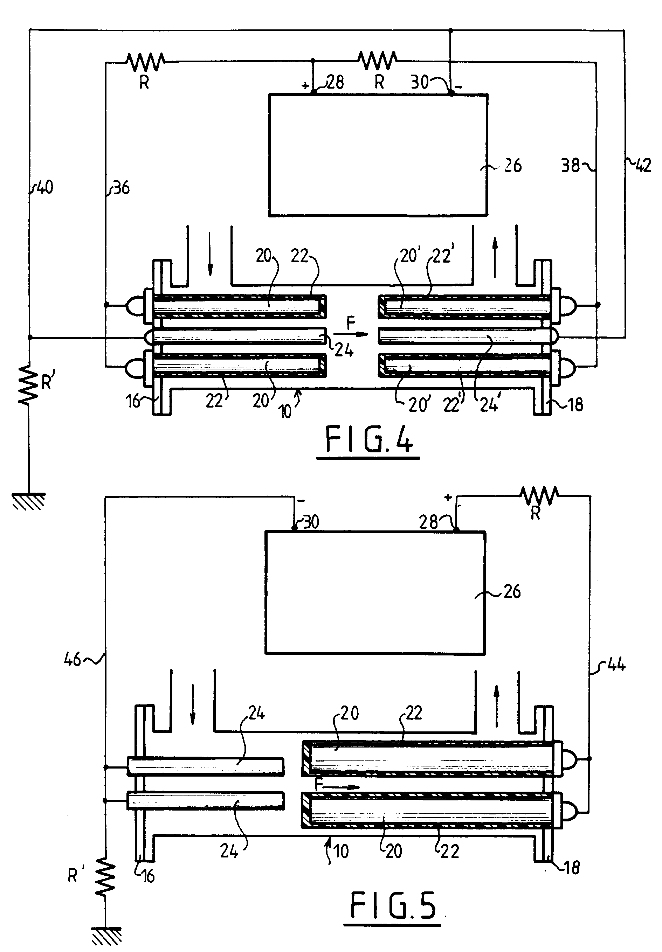

On se réfère maintenant à la figure 4 qui montre une autre forme de réalisation du dispositif, lequel comprend un récipient 10 analogue à celui de la figure 1. Le flasque 16 supporte, en son centre, une contre-électrode 24 à surface externe nue et, autour de la contre-électrode 24, au moins deux électrodes 20 dont la surface externe est revêtue d'une couche isolante 22. De manière analogue, le flasque 18 supporte, en son centre, une contre-électrode 24′ et, de part et d'autre de cette contre-électrode, deux ou plusieurs électrodes 20′ dont la surface externe est revêtue d'une couche isolante 22′. Toutes ces électrodes sont à direction générale parallèles entre elles et parallèles à la direction de l'écoulement de l'électrolyte liquide à l'intérieur du récipient, comme représenté par la flèche F. Il en résulte que les électrodes 20 sont situées au même niveau que la contre-électrode 24, dans l'écoulement de l'électrolyte liquide à l'intérieur du récipient, et qu'il en est de même pour la contre-électrode 24′ qui se situe au même niveau que les électrodes 22′ dans cet écoulement.

Les électrodes 20 sont connectées à la borne positive 28 de l'alimentation haute tension 26 par une liaison 36 sur laquelle est insérée une résistance R destinée à limiter le courant de court-circuit. De même, les électrodes 20′ sont reliées à la borne positive 28 par une liaison 38 sur laquelle est insérée une autre résistance R pour limiter le courant de court-circuit.

Les contre-électrodes 24 et 24′ sont connectées à la borne négative 30 de l'alimentation 26 respectivement par deux liaisons 40 et 42, lesquelles sont reliées à la terre par une résistance R′ destinée à protéger la tuyauterie à la terre contre le courant de court-circuit.

Comme dans le cas de la figure 1, le récipient 10 peut être formé d'un matériau conducteur ou isolant.

Dans la forme de réalisation de la figure 5, à laquelle on se réfère maintenant, le dispositif comprend un récipient 10 analogue aux récipients représentés aux figures 1 et 4.

Le flasque 16 supporte au moins deux contre-électrodes 24 qui s'étendent parallèlement entre elles et qui plongent dans l'électrolyte liquide qui traverse le récipient 10.

Le flasque 18 supporte au moins deux électrodes 20 dont la surface externe est revêtue d'une couche isolante 22.

Les électrodes 20 sont connectées à la borne positive 28 de l'alimentation haute tension 26 par l'intermédiaire d'une liaison 44 sur laquelle est insérée une résistance R destinée à limiter le courant de court-circuit.

Les contre-électrodes 24 sont connectées à la borne négative 30 de l'alimentation 26 par une liaison 46 qui est reliée à la terre par une résistance R′ destinée à protéger la tuyauterie contre le court de court-circuit.

Les électrodes 20 et les contre-électrodes 24 sont à direction générale parallèle entre elles et parallèle à la direction d'écoulement de l'électrolyte liquide à l'intérieur du récipient, comme représenté par la flèche F. Dans l'exemple représenté, les contre-électrodes 24 se situent en amont des électrodes 20 par rapport à l'écoulement de l'électrolyte comme représenté par la flèche F. En variante, on pourrait prévoir que les électrodes 20 soient situées en amont des contre-électrodes 24.

Dans les dispositifs représentés respectivement aux figures 1, 4 et 5, la structure définie par l'ensemble des électrodes et contre-électrodes est coaxiale et symétrique. Cette symétrie n'est pas imposée par le principe de fonctionnement du dispositif mais par des considérations de commodité de réalisation.

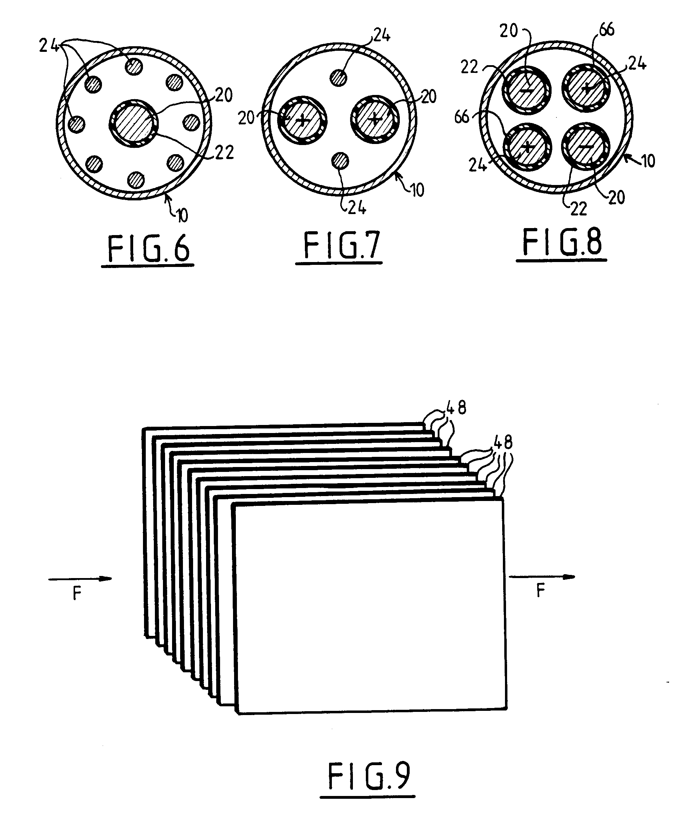

Dans la forme de réalisation de la figure 6, à laquelle on se réfère maintenant, le récipient 10 comprend, comme montré à la figure 2, une électrode centrale 20, revêtue sur sa surface externe d'une couche isolante 22 ainsi que huit contre-électrodes 24 à surface conductrice en contact avec le liquide et disposées à la périphérie de l'électrode 20.

Dans la forme de réalisation de la figure 7, à laquelle on se réfère maintenant, la structure de l'ensemble est non coaxiale et non symétrique. A l'intérieur du récipient, on trouve deux électrodes 20 disposées parallèlement entre elles et sur un même niveau horizontal, ainsi que deux contre-électrodes 24 à surface conductrice en contact avec le liquide et s'étendant parallèlement entre elles et superposées verticalement. Dans cette forme de réalisation, les électrodes et les contre-électrodes sont toutes formées de barreaux cylindriques circulaires. Toutefois, le diamètre des contre-électrodes est beaucoup plus faible que celui des électrodes.

Dans la forme de réalisation de la figure 8, on trouve également deux électrodes 20 disposées parallèlement entre elles et cela dans un plan incliné par rapport à l'horizontale et à la verticale ainsi que deux contre-électrodes 24 parallèles entre elles et disposées dans un plan incliné par rapport à l'horizontale et la verticale. Les électrodes et contre-électrodes sont formées de barreaux cylindriques ayant le même diamètre et recouverts chacun d'une couche isolante, respectivement 22 et 66.

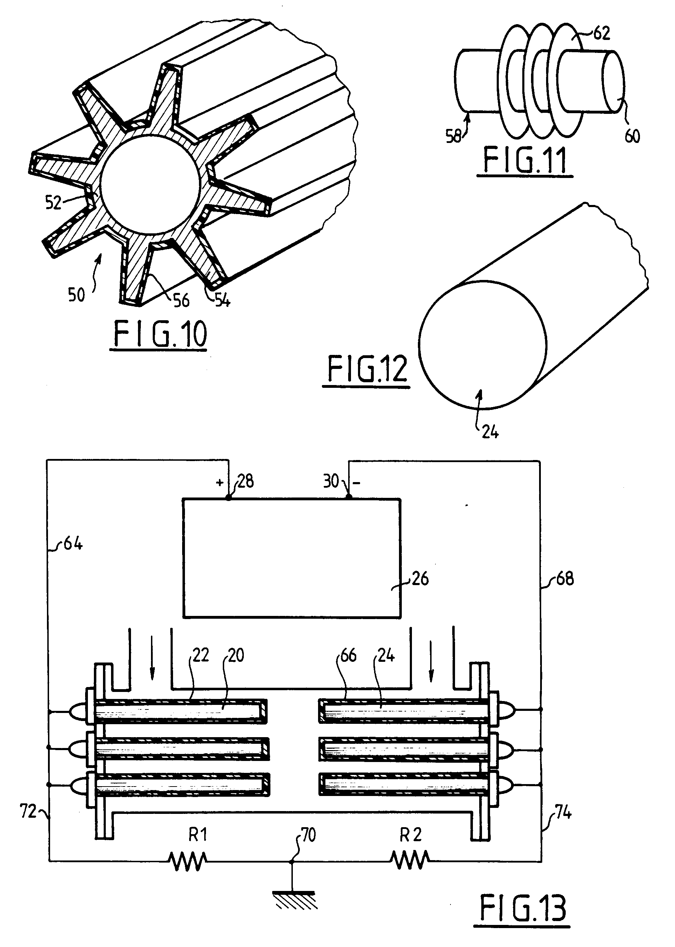

Dans la forme de réalisation de la figure 9, à laquelle on se réfère maintenant, les électrodes haute tension sont des plaques 48, chacune recouverte d'une couche isolante, par exemple formée d'un polymère. Ces plaques ont une forme générale rectangulaire et sont disposées parallèlement entre elles en ménageant, deux à deux, un espace pouvant, par exemple, avoir une épaisseur de 5 mm. Les plaques 48 sont reliées à la borne positive d'une alimentation haute tension continue par des connexions (non représentées) qui sont soudées auxdites plaques et isolées par la même couche de polymère. Les contre-électrodes (non représentées) sont situées en amont ou en aval des plaques 48 par rapport à la direction d'écoulement du liquide à traiter, comme représenté par les flèches F. On peut aussi choisir les tuyauteries métalliques d'amenée et de départ du liquide comme contre-électrodes.

On se réfère maintenant à la figure 10 qui montre une électrode ayant la forme d'un profilé à section transversale en forme d'étoile. Il s'agit d'un profilé creux comportant une partie annulaire 52 dont dépendent huit ailes radiales 54 de même longueur et disposées équi-angulairement entre elles. La surface externe du profilé en forme d'étoile est recouverte d'une couche isolante 56, formée, par exemple, d'un matériau polymère.

La figure 11 montre une électrode 58 comprenant un tube cylindrique circulaire creux 60 sur lequel sont rapportées, à espacement régulier, des couronnes circulaires 62, l'ensemble étant revêtu d'une couche isolante, par exemple du type polymère. L'électrode 58 est destinée à être portée à haute tension.

La figure 12 montre une contre-électrode 24 formée d'un barreau cylindrique plein en matériau conducteur, ce barreau étant à surface extérieure nue. La contre-électrode 24 est destinée à être reliée à la borne négative d'une alimentation haute tension continue.

Dans la forme de réalisation de la figure 13, à laquelle on se réfère maintenant, le dispositif comprend également un récipient 10 analogue à celui représenté précédemment. Le flasque 16 supporte plusieurs électrodes 20, chacune revêtue d'une couche isolante 22. Les électrodes 20 sont parallèles entre elles et plongent dans le liquide circulant à l'intérieur du récipient. Elles sont reliées à la borne positive 28 d'une alimentation haute tension continue 26 par une liaison électrique 64.

Le flasque 18 supporte plusieurs contre-électrodes 24 qui, dans ce cas, sont chacune revêtues d'une couche isolante 66. Ces électrodes 24 sont disposées parallèlement entre elles et plongent dans le liquide traversant le récipient 10. Elles sont reliées à la borne négative 30 de l'alimentation 26 par une liaison électrique 68. Il est prévu un pont de résistances R1 et R2 comportant un point intermédiaire 70 relié à la masse, ce pont étant lui-même connecté d'une part aux électrodes 20 par une liaison électrique 72 et, d'autre part, aux contre-électrodes 24 par une liaison électrique 74. La présence d'un tel pont de résistances est souhaitable pour les raisons qui vont être indiquées maintenant.

En effet, si aucun point de l'alimentation n'était à la masse, le potentiel se partagerait entre les électrodes et les contre-électrodes en fonction de l'inverse de leur capacité par rapport à l'écoulement d'électrolyte conducteur. A ce propos, il faut signaler que la capacité des couches doubles, qui est très élevée par rapport à celle due à l'isolement diélectrique des électrodes, ne compte pas dans le calcul (si une forte capacité est en série avec une faible capacité, la capacité de l'ensemble est très voisine de la plus faible). On peut tirer partie de cette configuration si les réactions chimiques à catalyser concernent aussi bien les ions négatifs que les ions positifs. Un défaut de cet arrangement est que les potentiels varient si l'on modifie la surface des électrodes ou à la suite d'une rupture de la couche diélectrique de protection. Dans ce dernier cas, tout le potentiel se trouverait reporté sur l'électrode de polarité opposée, ce qui pourrait entraîner la rupture de sa couche diélectrique de protection. On comprend, dans ces conditions, qu'il est préférable de fixer le potentiel des électrodes en faisant débiter l'alimentation sur un pont de résistances dont un point est réuni à la masse.

Comme il a été indiqué précédemment, la couche isolante servant de revêtement aux électrodes destinées à être portées à haute tension et, le cas échéant, aux contre-électrodes destinées à être portées à basse tension est avantageusement constituée d'un polymère. A ce titre, on peut utiliser trois catégories principales de polymère, à savoir : les polyamides, les polyoléfines et les polymères fluorés.

Parmi les polyamides, on peut citer tout particulièrement ceux désignés sous les marques Technyl, Nylon, Rilsan, et particulièrement le PA11 et le Rilsan Amno. Le polyamide du type PA11 est particulièrement approprié au revêtement de plaques car il absorbe à saturation 2 % de son poids d'eau, ce qui augmente sa constante diélectrique relative. Pour un courant continu, celle-ci peut alors être estimée à environ 10, au lieu de 3,7 pour le produit sec et en courant alternatif. Sa résistivité est de l'ordre de $5 \times 10^{11}$ Ohm m (mesurée sur un échantillon de 1 mm d'épaisseur soumis à une tension de 500 Volts). Le potentiel disruptif est, pour une épaisseur de 0,5 mm et pour un échantillon saturé d'eau, de l'ordre de 15 kV. On choisira une tension appliquée maximale de 7 kV. Dans ces conditions, la charge superficielle correspondante de l'interface métal-polymère sera de l'ordre de 0,125 $\mu$C cm$^{-2}$. Cette valeur est très faible par rapport à la valeur typique de 10 $\mu$C cm$^{-2}$ de la couche double et l'effet obtenu est négligeable. Cependant, le courant de fuite par m$^2$ serait d'environ 30 micro-ampères si la Loi d'Ohm était applicable et le transfert par la résistance de fuite de 0,1 Cm$^{-2}$ (nécessaire pour obtenir la charge superficielle de la couche double de 10 $\mu$C cm$^{-2}$) prendrait presque une heure, ce qui signifie qu'un temps d'accomodation d'une heure serait nécessaire avant que le dispositif ne devienne efficace. Ce temps est réduit à quelques minutes par suite de l'effet cité précédemment en relation à la figure 3.

Parmi les polyoléfines, on peut citer celles commercialisées sous les marques Napryl et Lacqtène qui sont des polyéthylènes du type HD (haute densité) pouvant être moulés par injection sur des électrodes métalliques. Ce polyéthylène n'absorbe pratiquement pas l'eau et sa constante diélectrique relative, pour un courant continu, peut être estimée à environ 3. Sa résistivité est de l'ordre de 10$^{16}$ Ohm m à basse tension. Le potentiel disruptif intrinsèque est, pour une épaisseur de 0,5 mm, de l'ordre de 300 kV. Cependant, cette valeur est beaucoup plus faible si l'on tient compte des inhomogénéités du champ. Par ailleurs, le champ disruptif (rapport du potentiel disruptif à l'épaisseur) décroît lorsque l'épaisseur augmente. C'est pourquoi on a intérêt à choisir une épaisseur de revêtement isolant aussi faible que possible, la limite étant imposée par les tolérances dimensionnelles sur cette épaisseur. En effet, pour les très faibles épaisseurs, les irrégularités inévitables entre les épaisseurs de la couche isolante déposée sur les divers conducteurs recouverts d'isolant peuvent conduire à des contraintes locales inadmissibles sur certaines parties des électrodes. Une valeur raisonnable pour l'épaisseur de la couche de polymère est par exemple de 0,5 mm. Dans ce cas, on choisira avantageusement une tension appliquée de l'ordre de 30 kV et, dans ces conditions, la charge superficielle de l'interface métal-polymère sera de l'ordre de 1,5 $\mu C$ cm$^{-2}$. Cette valeur est encore faible par rapport à la valeur typique de 10 $\mu C$ cm$^{-2}$ de la couche double et l'effet obtenu est moins marqué. Le courant de fuite par m$^2$ serait de quelques nano-ampères si la Loi d'Ohm était applicable et le transfert par la résistance de fuite de la charge de 0,1 Cm$^{-2}$ (nécessaire pour obtenir la charge superficielle de la couche double de 10 $\mu C$ cm$^{-2}$) exigerait un temps pratiquement infini. L'effet cité précédemment, en relation avec la figure 3, peut être insuffisant pour le réduire à une valeur acceptable. Ce type de polymère n'est donc pas utilisable pour toutes les applications.

Parmi les polymères fluorés, on peut citer le polytétrafluoréthylène (PTFE) tel que celui commercialisé sous les marques TEFLON, KEL-F, TEFLON FEP, ainsi que le polyéthylène ou polyproprylène perfluoré (FEP). Ces polymères fluorés peuvent être utilisés pour le revêtement des électrodes en forme de plaques, de câbles et de fils. Ces polymères sont non mouillables et peu contaminables par l'eau, l'absorption de molécules d'eau à saturation étant à peine un peu plus forte que pour les polyéthylènes (de l'ordre du mg d'eau pour 100 g de polymère). Leur constante diélectrique relative est voisine de 2. Le PTFE a une résistivité de 5 x 10$^{16}$ Ohm x m et le FEP de 3 x 10$^{13}$ Ohm x m à basse tension. Leur potentiel disruptif est le même que celui des polyéthylènes. On choisira une tension de 30 kV sur une épaisseur de 0,5 mm. La densité de charge superficielle obtenue est de 1 $\mu C$ cm. Le courant de fuite par m$^2$ serait, pour le FEP, si la Loi d'Ohm était applicable, de 2 micro-ampères et il faudrait une demi-journée pour transférer à l'interface polymère-électrolyte la charge de 0,1 Cm$^{-2}$. Le caractère non linéaire de la loi de conductivité réduit ce temps à une valeur acceptable.

Bien entendu, l'invention est susceptible de nombreuses variantes, en particulier en ce qui concerne la disposition relative des électrodes et/ou contre-électrodes. Celles-ci pourraient également être constituées par une multiplicité de fils tendus disposés parallèlement à l'écoulement de l'électrolyte liquide dans le récipient ou d'une manière oblique par rapport à cet écoulement.

Par ailleurs, la forme du récipient n'est pas obligatoirement cylindrique et l'on peut concevoir des récipients ayant d'autres formes. Quelle que soit la forme adoptée, on a tout intérêt à choisir des récipients, comportant des parties amovibles sur lesquelles sont fixées la ou chaque électrode et la ou chaque contre-électrode, de manière à permettre un remplacement aisé de celles-ci, si nécessaire.

L'invention est tout particulièrement applicable au traitement de l'eau de rivière ou de ville pour empêcher l'entartrage d'installations de refroidissement, notamment dans des centrales nucléaires.

## Revendications

1. Dispositif de traitement électrique d'électrolytes liquides, en particulier d'eau de ville ou de rivière, comprenant un récipient (10) propre à être traversé par l'électrolyte à traiter, au moins une électrode (20 ; 48 ; 50 ; 58) disposée à l'intérieur du récipient et comportant une surface conductrice recouverte d'une couche d'isolant (22 ; 56), une alimentation haute tension continue (26) et des moyens pour relier la surface conductrice de la (des) électrode(s) à une borne positive (28) de l'alimentation haute tension,
caractérisé en ce qu'il comprend en outre au moins une contre-électrode (24) disposée à l'intérieur du récipient et possédant une surface conductrice nue ou recouverte d'une couche d'isolant, qui est reliée à une borne de polarité négative (30) de l'alimentation haute tension ;
en ce que la (les) électrode(s) (20 ; 48 ; 50 ; 58) recouverte(s) d'une couche d'isolant et la (les) contre-électrodes (24) recouverte(s) d'une couche d'isolant ont, indépendamment de leur configuration ou de leur disposition mutuelle, une surface de paroi aussi grande que possible pour fournir une surface de contact aussi élevée que possible entre la couche d'isolant et l'électrolyte à traiter.

2. Dispositif selon la revendication 1, caractérisé en ce que la ou chaque électrode (20) d'une part et la ou chaque contre-électrode (24) d'autre part, sont situées au même niveau dans l'écoulement (F) de l'électrolyte liquide dans le récipient (10).

3. Dispositif selon la revendication 1, caractérisé en ce que la ou chaque électrode (20) d'une part et la ou chaque contre-électrode (24) d'autre part, sont situées en aval ou en amont les unes des autres dans l'écoulement (F) de l'électrolyte liquide dans le récipient (10).

4. Dispositif selon la revendication 1, caractérisé en ce qu'il comprend plusieurs électrodes constituées par des plaques (48) disposées parallèlement à l'écoulement (F) de l'électrolyte liquide dans le récipient (10).

5. Dispositif selon la revendication 1, caractérisé en ce que la ou chaque électrode a la forme d'un profilé (50) à section transversale en forme d'étoile.

6. Dispositif selon la revendication 1, caractérisé en ce que la ou chaque électrode (58) a la forme d'un tube cylindrique circulaire creux (60) sur lequel sont rapportées des couronnes circulaires (62) de diamètre supérieur à celui du tube.

7. Dispositif selon la revendication 1, caractérisé en ce qu'il comprend plusieurs électrodes constituées sous la forme d'une multiplicité de fils isolés tendus parallèlement à la direction d'écoulement (F) de l'électrolyte liquide à l'intérieur du récipient (10).

8. Dispositif selon la revendication 1, caractérisé en ce qu'il comprend plusieurs électrodes constituées sous la forme d'une multiplicité de fils isolés formant un angle non nul avec la direction d'écoulement (F) de l'électrolyte liquide dans le récipient (10).

9. Dispositif selon l'une des revendications 1 à 8, caractérisé en ce que la ou chaque contre-électrode (24) a une surface métallique nue, reliée à la terre par une résistance R.

10. Dispositif selon l'une des revendications 1 à 9, caractérisé en ce qu'il comprend en outre au moins une troisième électrode comportant une surface conductrice nue, portée à une tension électrique intermédiaire entre celle de la ou chaque électrode (20) et de la ou chaque contreélectrode (24).

**Claims**

1. Device for electrical processing of liquid electrolytes, in particular town or river water, comprising a container (10) through which passes the electrolyte to be processed, at least one electrode (20; 48; 50; 58) arranged inside the container and comprising a conductive surface covered with a layer of insulation (22; 56), a continuous high voltage supply (26) and means for linking the conductive surface of the electrode(s) to a positive terminal (28) of the high voltage supply,
characterized in that it also comprises at least one counter-electrode (24) arranged inside the container and having a conductive surface bare or covered with an insulating layer, which is linked to a negative polarity terminal (30) of the high voltage supply;
in that the electrode(s) (20; 48; 50; 58) covered with an insulating layer and the counter-electrode(s) (24) covered with an insulating layer have, independently of their configuration or their mutual arrangement, a wall area as large as possible to provide a contact surface as high as possible between the insulating layer and the electrolyte to be processed.

2. Device according to claim 1, characterized in that the or each electrode (20) on one side and the or each counter-electrode (24) on the other side are located at the same level in the flow (F) of the liquid electrolyte in the container (10).

3. Device according to claim 1, characterized in that the or each electrode (20) on one side and the or each counter-electrode (24) on the other side are located upstream and downstream of each other in the flow (F) of the liquid electrolyte in the container (10).

4. Device according to claim 1, characterized in that it comprises several electrodes constituted by plates (48) arranged parallel to the flow (F) of the liquid electrolyte in the container (10).

5. Device according to claim 1, characterized in that the or each electrode has the shape of a profile (50) with transverse section in the form of a star.

6. Device according to claim 1, characterized in that the or each electrode (58) has the form of a hollow circular cylindrical tube (60) on which are arranged circular crowns (62) of diameter greater than that of the tube.

7. Device according to claim 1, characterized in that it comprises several electrodes constituted in the form of a multiplicity of insulated wires extended parallel to the direction of flow (F) of the liquid electrolyte within the container (10).

8. Device according to claim 1, characterized in that it comprises several electrodes constituted in the form of a multiplicity of insulated wires forming an angle other than zero with the direction of flow (F) of the liquid electrolyte in the container (10).

9. Device according to any of claims 1 to 8, characterized in that the or each counter-electrode (24) has a bare metallic surface linked to earth by a resistor R.

10. Device according to any of claims 1 to 9, characterized in that it also comprises a third electrode with a bare conductive surface brought to an intermediate electrical voltage between that of the or each electrode (20) and the or each counter-electrode (24).

**Patentansprüche**

1. Gerät zur elektrischen Behandlung von flüssigen Elektrolyten, insbesondere von Stadt- oder Flußwasser, mit einem Behälter (10), der geeignet ist, von dem zu behandelnden Elektrolyten durchströmt zu werden, mindestens einer Elektrode (20; 48; 50; 58), die im Inneren des Behälters angeordnet ist und eine leitende Oberfläche aufweist, die mit einer Isolierschicht (22; 56) abgedeckt ist, einer Hochspannungs-Gleichstromquelle (26) und einer Verbindung der leitenden Oberfläche der Elektrode(n) mit einem positiven Pol (28) der Hochspannungsquelle,
dadurch gekennzeichnet, daß das Gerät ferner mindestens eine Gegenelektrode (24) aufweist, die im Inneren des Behälters angeordnet ist und eine leitende, blanke oder mit einer Isolierschicht versehene Oberfläche aufweist, welche mit einem negativen Pol (30) der Hochspannungsquelle verbunden ist;
und daß die mit einer Isolierschicht abgedeckte(n) Elektrode(n) (20; 48; 50; 58) und die mit einer Isolierschicht abgedeckte(n) Gegenelektrode(n) (24) unabhängig von ihrer Konfiguration oder ihrer Anordnung relativ zueinander eine Wandungsfläche aufweisen, die so groß wie möglich dimensioniert ist, so daß zwischen der Isolierschicht und dem zu behandelnden Elektrolyten eine möglichst große Kontaktfläche vorhanden ist.

2. Gerät nach Anspruch 1,
dadurch gekennzeichnet, daß die oder jede Elektrode (20) einerseits und die oder jede Gegenelektrode (24) andererseits in dem Strom (F) des flüssigen Elektrolyten in dem Behälter (10) auf demselben Niveau angeordnet sind.

3. Gerät nach Anspruch 1,
dadurch gekennzeichnet, daß die oder jede Elektrode (20) einerseits und die oder jede Gegenelektrode (24) andererseits in dem Strom (F) des flüssigen Elektrolyten in dem Behälter (10) unter- oder übereinander angeordnet sind.

4. Gerät nach Anspruch 1,
dadurch gekennzeichnet, daß das Gerät mehrere Elektroden aufweist, die durch Platten (48) gebildet sind, die parallel zu dem Strom (F) des flüssigen Elektrolyten in dem Behälter (10) angeordnet sind.

5. Gerät nach Anspruch 1,
dadurch gekennzeichnet, daß die oder jede Elektrode als Profil (50) mit sternförmigem Querschnitt ausgebildet ist.

6. Gerät nach Anspruch 1,
dadurch gekennzeichnet, daß die oder jede Elektrode (58) als kreisrundes zylindrisches Hohlrohr (60) ausgebildet ist, auf welches kreisringförmige Scheiben (62) aufgesetzt sind, deren Durchmesser größer ist als der des Rohres.

7. Gerät nach Anspruch 1,
dadurch gekennzeichnet, daß das Gerät mehrere Elektroden aufweist, die durch eine Vielzahl von isolierten Drähten gebildet sind, die parallel zur Strömungsrichtung (F) des flüssigen Elektrolyten im Innenraum des Behälters (10) gespannt sind.

8. Gerät nach Anspruch 1,
dadurch gekennzeichnet, daß das Gerät mehrere Elektroden aufweist, die durch eine Vielzahl von isolierten Drähten gebildet sind, die mit der Strömungsrichtung (F) des flüssigen Elektrolyten in dem Behälter (10) einen Winkel ungleich null bilden.

9. Gerät nach einem der Ansprüche 1 bis 8,
dadurch gekennzeichnet, daß die oder jede Gegenelektrode (24) eine blanke metallische Oberfläche hat, die über einen Widerstand R an Erde liegt.

10. Gerät nach einem der Ansprüche 1 bis 9,
dadurch gekennzeichnet, daß das Gerät ferner mindestens eine dritte Elektrode aufweist, die eine blanke leitende Oberfläche hat, an welcher eine elektrische Spannung anliegt, die zwischen den Spannungen liegt, die zwischen der oder jeder Elektrode (20) und der oder jeder Gegenelektrode (24) anstehen.

EP 0 376 835 B1

FIG.1

FIG.2

FIG.3

14

FIG.4

FIG.5

FIG.6

FIG.7

FIG.8

FIG.9

FIG.10

52
50
56 54

FIG.11

58
62
60

FIG.12

24

+ 28
30 −
64
26
68
22 20
66 24
72
74
R1
70
R2

FIG.13